# EUROPÄISCHE PATENTSCHRIFT

(11) **EP 1 968 725 B1**
(45) Veröffentlichungstag und Bekanntmachung des Hinweises auf die Patenterteilung: **01.02.2012**
(21) Anmeldenummer: 06828665.7
(22) Anmeldetag: 13.12.2006
(51) Int. Cl.: B01D 46/52

(54) **PLATTENFÖRMIGER FILTEREINSATZ**
PLATE-SHAPED FILTER INSERT
ELEMENT DE FILTRATION PLAT

(30) Priorität: 24.12.2005 DE 102005062209
(43) Veröffentlichungstag der Anmeldung: 17.09.2008
(73) Patentinhaber: Mahle International GmbH, 70376 Stuttgart (DE)
(72) Erfinder: GEBERT, Hans, 74080 Heilbronn (DE); WAIBEL, Hans, 71686 Remseck/Aldingen (DE)
(74) Vertreter: Jooß, Martin
(86) Internationale Anmeldenummer: PCT/DE2006/002230
(87) Internationale Veröffentlichungsnummer: WO 2007/076798

(56) Entgegenhaltungen:
- EP-A1- 0 948 985
- DE-A1- 4 430 333
- DE-A1- 10 249 110

## Beschreibung

Die Erfindung betrifft einen plattenförmigen Filtereinsatz nach dem Oberbegriff des Patentanspruchs 1.

Ein solcher Filtereinsatz ist aus DE 87 09 100 U1 bekannt.

Ein ähnlicher Plattenfiltereinsatz, bei dem die Filterfalten stirnseitig durch einen Dichtstreifen verschlossen sind, ist aus EP 0 490 169 B1 und der EP 0 948 985 A1 bekannt.

Ein weiterer plattenförmiger Filtereinsatz ist aus der DE 102 49 110 A1 bekannt.

Die Erfindung beschäftigt sich mit dem Problem, einen gattungsgemäßen Filtereinsatz besonders einfach und kostengünstig bei dennoch gegebener, hoher Fertigungsqualität und Standfestigkeit herstellen zu können.

Gelöst wird dieses Problem bei einem gattungsgemäßen Filtereinsatz mit den kennzeichnenden Merkmalen des Patentanspruchs 1.

Vorteilhafte und zweckmäßige Ausgestaltungen sind Gegenstand der Unteransprüche.

Die Erfindung beruht auf dem allgemeinen Gedanken, an einer Plattenoberseite eine einfach herstellbare, umlaufende Auflage für eine auf diese aufzubringende elastische Dichtmasse zu schaffen. Die elastische Dichtmasse kann insbesondere aufschäumbares Polyurethan sein, das ein für derartige Dichtungen bekanntes Dichtmaterial ist. Die Auflage wird an den Stirnseiten des gefalteten, als Filtermaterial eingesetzten Bahnenmaterials von einem die Falten stirnseitig verschließenden ersten Dichtstreifen gebildet, der zur Bildung der seitlich abstehenden Auflage um 90° abgeknickt beziehungsweise abgewinkelt wird. Die Auflage an den in Bahnenlängsrichtung liegenden Enden des Plattenfilters wird von in der Ebene der ersten Dichtstreifen aufgebrachten zweiten Dichtstreifen gebildet. Diese zweiten Dichtstreifen werden beispielsweise auf die jeweils frei auslaufende Kante der letzten Falte aufgeklebt und dicht mit dem ersten Dichtstreifen verbunden. Zur Erzielung einer dichten Verbindung mit den ersten Dichtstreifen werden die zweiten Dichtstreifen gegenüber den ersten Dichtstreifen überlappend angebracht.

Auf die damit durch die beiden Dichtstreifen gebildete umlaufende Auflage wird die elastische Dichtmasse in der Form eines kontinuierlich erzeugten Materialstranges aufgebracht. Bei Aufbringung eines Polyurethanschaum-Grundmaterials erfolgt nach dem Aufbringen des Grundmaterials ein Aufschäumprozess.

Um eine möglichst stabile Verbindung zwischen den abgeknickten Bereichen der ersten Dichtstreifen über den Knickbereich zu dem angrenzenden Dichtstreifenmaterial zu gewährleisten, greift das elastische Dichtmaterial mit einem Randbereich gleichzeitig an den Faltenrücken kraft- und/oder stoffschlüssig an. Das gleiche gilt für die zweiten Dichtstreifen.

Als eine Alternative zu der vorstehend genannten Ausbildung kann das elastische Dichtmaterial "von unten" in dem jeweiligen Knickkantenbereich der ersten Dichtstreifen angebracht werden. Auf diese Weise wird der Knickkantenbereich der zweiten Dichtstreifen verfestigt. Bei einer derart aufgebrauchten elastischen Dichtmasse verstärkt diese im Bereich der ersten Dichtstreifen deren Befestigung an den betreffenden Endfaltenbereichen ebenfalls. Bei den zweiten Dichtstreifen kann das elastische Dichtungsmaterial in gleicher Weise in dem an die Endfalten angrenzenden Kantenbereich "von unten" aufgebracht werden. Dies ist für eine umlaufende Dichtung sogar für den Fall erforderlich, dass das Dichtmaterial an den ersten Dichtstreifen "von unten" aufgebracht ist. Eine feste Verbindung ist erforderlich, da der Filtereinsatz im Bereich der abstehenden Dichtstreifen mit der dort vorgesehenen elastischen Dichtung zwischen zwei Filtergehäusehälften freitragend eingespannt wird.

Ein vorteilhaftes, nachstehend näher erläutertes Ausführungsbeispiel ist in der Zeichnung dargestellt.

In dieser zeigen
- Fig. 1: eine perspektivische Ansicht eines plattenförmigen Filtereinsatzes,
- Fig. 2: einen Schnitt nach Linie II-II durch den Filtereinsatz in Fig. 1,
- Fig. 3: einen Schnitt nach Linie III-III durch den Filtereinsatz in Fig. 1.

Ein plattenförmiger Filtereinsatz besteht aus einem zickzackförmig gefalteten bahnenförmigen Filtermaterial 1 mit umlaufenden Dichtmitteln. Die Dichtmittel umfassen erste Dichtstreifen 2, die die stirnseitigen Falten seitlich verschließen. An einer Oberseite des Filtereinsatzes, in der die Faltenrücken des Filtermaterials 1 eine Ebene bilden, sind die seitlichen, ersten Dichtstreifen 2 mit einem Randbereich nach außen derart abgeknickt, dass diese Randbereiche etwa in der vorgenannten Ebene liegen.

In Bahnenlängsrichtung des Filtereinsatzes sind quer zu dieser Längsrichtung an dort jeweils einem frei auslaufenden Faltenendbereich jeweils zweite Dichtstreifen 3 dicht aufgebracht, beispielsweise geklebt. Für eine dichte Verbindung der zweiten Dichtstreifen 3 mit den ersten Dichtstreifen 2 werden die zweiten Dichtstreifen 3 überlappend auf die ersten Dichtstreifen 2 dicht aufgebracht.

Auf die derart in der Ebene der Faltenrücken einer Plattenoberseite ausgerichteten ersten und zweiten Dichtstreifen 2, 3 wird umlaufend ein Strang aus elastischem Dichtmaterial aufgebracht. Bei Verwendung von Polyurethan zur Ausbildung einer elastischen Dichtung wird das Polyurethan-Grundmaterial für eine anschließende Aufschäumreaktion etwa pastös auf die Dichtstreifen 2, 3 aufgetragen.

Um eine gute Festigkeit zwischen den Dichtstreifen 2, 3, das heißt konkret der Bereiche, die mit der elastischen Dichtmasse 4 versehen sind, gegenüber den übrigen Filtereinsatzbereichen zu erhalten, wird das elastische Dichtmaterial derart auf die Dichtstreifen 2 und 3 aufgebracht, dass ein Randbereich das Filtermaterial 1 im Bereich der Faltenrücken kraftschlüssig ergreift. Diese Ausführungsform der aufgebrachten elastischen Dichtmasse 4 ist in dem gezeichneten Ausführungsbeispiel konkret dargestellt.

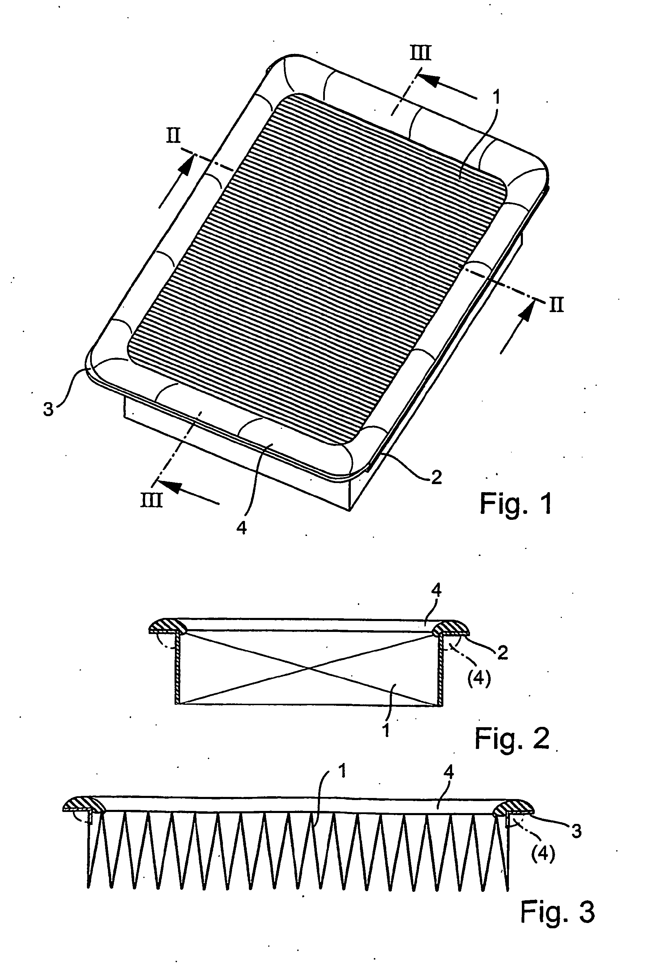

Eine alternative Ausführung besteht darin, dass das elastische Dichtmaterial 4 "von unten" seitlich in den Innenkantenbereichen der ersten und zweiten Dichtstreifen 2,- 5 angebracht wird, wie dies durch strichpunktierte Linien für die Dichtmasse 4 in den Fig. 2 und 3 angedeutet ist.

## Patentansprüche

1. Plattenförmiger Filtereinsatz für insbesondere ein Gasfilter mit einer an einer ersten der beiden gegenüberliegenden Plattenoberflächen nach außen abstehenden Dichtung, mit den Merkmalen
- das Filtermaterial (1) ist als zickzackförmig gefaltetes Bahnenmaterial ausgebildet, dessen jeweils stirnseitige Falten durch einen ersten Dichtstreifen (2) verschlossen sind,
- die ersten Dichtstreifen (2) ragen jeweils an einer der beiden gegenüberliegenden, von den Faltenrücken gebildeten Plattenoberseiten nach außen abgeknickt ab,
- an den in Längsrichtung des Bahnenmaterials liegenden Endfalten ist jeweils ein quer zu dieser Längsrichtung verlaufender, zweiter Dichtstreifen (3) angebunden,
- die zweiten Dichtstreifen (3) sind jeweils dicht mit den ersten Dichtstreifen (2) verbunden,
- an die dicht miteinander verbundenen, ersten und zweiten Dichtstreifen (2, 3) ist eine umlaufende Dichtmasse (4) aufgebracht,
**dadurch gekennzeichnet,**
- **dass** die elastische Dichtmasse (4) einen seitlichen Randbereich der Faltrücken des zickzackförmig gefalteten Bahnenmaterials kraftschlüssig erfasst,
- **dass** ein Randbereich der Dichtmasse (4) den jeweiligen zweiten Dichtstreifen (3) unter kraft- und/oder stoffschlüssiger Verbindung mit mindestens einem Faltenbereich des Bahnenmaterials überragt.

2. Plattenförmiger Filtereinsatz nach Anspruch 1,
**dadurch gekennzeichnet,**
**dass** die elastische Dichtmasse (4) den jeweiligen Knickbereich der ersten Dichtstreifen (2) überdeckt.

3. Plattenförmiger Filtereinsatz nach Anspruch 1 oder 2,
**dadurch gekennzeichnet,**
**dass** die elastische Dichtmasse (4) aus aufschäumbarem Polyurethan besteht.

## Claims

1. A plate-shaped filter insert for a gas filter in particular, having a gasket that protrudes outward on a first of the two opposite plate surfaces, with the features
- filter material (1) is designed as sheeting material pleated in zigzag folds, the folds on the end being sealed by a first sealing strip (2),
- the first sealing strips each protruding on one of the two opposing plate-shaped surfaces that are formed by the backs of the folds and are opposite one another and bent outwards,
- a second sealing strip (3) running across the longitudinal direction is attached to the end folds arranged in the longitudinal direction of the sheeting material,
- the second sealing strips (3) are each tightly attached to the first sealing strips (2),
- a peripheral sealing compound (4) applied to the first and second sealing strips (2, 3) that are tightly joined together,
**characterized in that**
- the elastic sealing compound grips in a nonpositive manner a lateral edge area of the backs of the folds of the sheeting material folded in zigzag pleats,
- an edge area of the sealing compound (4) protrudes beyond the respective second sealing strip (3) with a nonpositive and/or bonded connection with at least one fold area of the sheeting material.

2. The plate-shaped filter insert according to Claim 1,
**characterized in that**
the elastic sealing compound (4) covers the respective kink area of the first sealing strips (2).

3. The plate-shaped filter insert according to Claim 1 or 2,
**characterized in that**
the elastic sealing compound (4) is made of a foamable polyurethane.

## Revendications

1. Cartouche filtrante en forme de plaque notamment pour filtre à gaz comportant un joint d'étanchéité dépassant vers l'extérieur sur une première des deux surfaces de plaque en vis-à-vis, avec les caractéristiques
- la matériau filtrant (1) est réalisé comme un matériau de bande plié en zigzag, dont les plis respectivement frontaux sont obturés par un premier ruban d'étanchéité (2),
- les premiers rubans d'étanchéité (2) rebiquent respectivement vers l'extérieur sur un des deux côtés supérieurs de plaque en vis-à-vis, formés par les dos de plis,
- sur le pli d'extrémité situé dans la direction longitudinale du matériau de bande est respectivement accolé un deuxième ruban d'étanchéité (3) s'étendant transversalement à cette direction longitudinale,
- les deuxièmes rubans d'étanchéité (3) sont respectivement reliés de manière étanche avec les premiers rubans d'étanchéité (2),
- sur le premier et le deuxième ruban d'étanchéité (2,3), reliés l'un à l'autre de manière étanche est appliqué un matériau d'étanchéité (4) périphérique,
**caractérisée en ce que**
- le matériau d'étanchéité élastique (4) sertit par conjonction de forme une zone de bord latérale du dos de pli du matériau de bande plié en zigzag,
- une zone de bord du matériau d'étanchéité (4) surplombe le deuxième ruban d'étanchéité (3) sous liaison par conjonction de force et/ou de matière avec au moins une zone de pli du matériau de bande.

2. Cartouche filtrante en forme de plaque selon la revendication 1,
**caractérisée en ce que**
le matériau d'étanchéité élastique (4) recouvre la zone de pliure respective du premier ruban d'étanchéité (2).

3. Cartouche filtrante en forme de plaque selon la revendication 1 ou 2,
**caractérisée en ce que**
le matériau d'étanchéité élastique (4) est constitué de polyuréthane moussant.
